Europäisches Patentamt

**European Patent Office**

Office européen des brevets

(11) Veröffentlichungsnummer: **0 036 593**
**B1**

(12) **EUROPÄISCHE PATENTSCHRIFT**

(45) Veröffentlichungstag der Patentschrift:
21.12.83

(51) Int. Cl.³: **A 21 D 13/08**

(21) Anmeldenummer: 81101909.0

(22) Anmeldetag: 14.03.81

(54) Schaumzuckererzeugnis.

(30) Priorität: 21.03.80 **DE 3010898**

(43) Veröffentlichungstag der Anmeldung:
30.09.81 **Patentblatt 81/39**

(45) Bekanntmachung des Hinweises auf die Patenterteilung:
21.12.83 **Patentblatt 83/51**

(84) Benannte Vertragsstaaten:
**AT BE CH FR GB IT LI LU NL SE**

(56) Entgegenhaltungen:
**DE - A - 2 639 673**
**GB - A - 713 598**
**US - A - 2 106 097**
**US - A - 4 068 007**

(73) Patentinhaber: **Dickmann GmbH & Co,
Kastanienallee 12, D-5860 Iserlohn (DE)**

(72) Erfinder: **Hülsenbusch, Dieter, Brandenburger
Strasse 20, D-4030 Ratingen (DE)**
Erfinder: **Bauer, Arno, Am Tannenkopf 3, D-5870 Hemer
(DE)**

(74) Vertreter: **Patentanwälte TER MEER - MÜLLER -
STEINMEISTER, Triftstrasse 4, D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Schaumzuckererzeugnis

Die Erfindung betrifft ein Schaumzuckererzeugnis, welches durch Aufbau einer Schaumzuckermasse auf einem Gebäckplättchen und Überziehen dieser Masse mit Schokolade oder Fondant oder Fettglasur hergestellt ist. Sobald die Überzugsmasse auf die Schaumzuckermasse aufgebracht ist, setzt ein Abkühlungsprozeß ein, welcher die Überzugsmasse erhärtet. Während dieses Vorganges liegt die Temperatur der Schaumzuckermasse bei etwa 34 Grad Celsius und die der Überzugsmasse bei etwa 31 Grad Celsius.

Der Abkühlungsvorgang vollzieht sich in einem besonderen Kühlkanal, wo die Schaumzuckermasse auf etwa 20 Grad Celsius abgekühlt wird. Zu diesem Zeitpunkt erfolgt die Verpackung und Einlagerung.

Sobald im Kühlkanal eine Temperatur der Schaumzuckermasse von etwa 20 Grad Celsius erreicht ist, entsteht ein Unterdruck im Bereich der durch die Überzugsmasse von der Außenluft abgeschlossenen Schaumzuckermasse von 0,9513 bar.

Dieser Unterdruck fällt nach der Verpackung und Einlagerung bei Temperaturen von 10 Grad Celsius auf 0,9188 bar. Dieselben Wirkungen können auch auf dem Transport des Erzeugnisses eintreten.

Sobald die Auslagerung des Schaumzuckererzeugnisses in einem Zwischenlager oder Endlager unmittelbar vor der Abgabe an den Endverbraucher erfolgt, steigt der Unterdruck bei einer dann gegebenen Raumtemperatur von etwa 25 Grad Celsius auf 0,9676 bar an.

Da die durch die Überzugsmasse abgeschlossene Schaumzuckermasse keine elastischen Eigenschaften, sondern eine amorphe Zusammensetzung aufweist, besteht die Gefahr, daß die unter verschiedenen Lagerbedingungen und Temperaturen eintretenden Veränderungen der Druckverhältnisse dazu führen, den Schaum in seiner Struktur zu beschädigen.

Diese Beschädigungen, welche auch auf die Überzugsmasse übergreifen, treten besonders dann ein, wenn das Schaumzuckererzeugnis anläßlich der Umlagerung und/oder auf dem Transport zwischen der Herstellungs- und der Verbrauchsstelle unterschiedlichen Druckverhältnissen ausgesetzt wird.

Herkömmlich bewirkt der Luftaustausch zwischen der Schaumzuckermasse und der Außenluft durch das unterschiedlich poröse Gebäckplättchen innerhalb von zwei bis vier Stunden seit der Herstellung einen Ausgleich des Unterdrucks. Bei diesem Vorgang spaltet sich die überzogene Schaumzuckermasse in dem Bereich, wo die relativ größten porösen Stellen des Gebäckplättchens eine Konzentrierung des Luftaustausches und damit einen Ausgleich des Unterdrucks in der Schaumzuckermasse stärker als andere weniger poröse Stellen zulassen.

Diese Spaltbildung wird von Fachleuten als Anzeigen für ein stabiles Schaumzuckererzeugnis angesehen.

Unter diesen Bedingungen kommt es nur dann nicht zu Beschädigungen der Überzugsmasse, wenn größere Schwankungen der Druckverhältnisse zwischen dem Luftdruck der Außenluft und dem Unterdruck in der überzogenen Schaumzuckermasse vermieden werden.

Anders sind die Verhältnisse, wenn es zu stärkeren Unterschieden der Drücke kommt, insbesondere, wenn das Schaumzuckererzeugnis anläßlich der Verwendung mit Flugzeugen oder beim Transport über hoch gelegene Straßen und/oder Gebirgspässe in relativ kurzer Zeit stark verändernden Druckverhältnissen ausgesetzt ist. Je nach Höhe des Unterdrucks in der Schaumzuckermasse ergibt sich ein Überdruck gegenüber der Außenluft unter den genannten Bedingungen. Da der Luftaustausch sich durch die unterschiedlich großen porösen Stellen des Gebäckplättchens nur sehr langsam vollzieht, kommt es unter solchen Bedingungen zum Bruch der Überzugsmasse. Durch die relative Ausdehnung der Luft innerhalb der Schaumzuckermasse wird ein Druck auf die Innenfläche der erkalteten und erhärteten Überzugsmasse ausgeübt, wodurch sich die Überzugsmasse von der Schaumzuckermasse löst, sobald normale Druckverhältnisse wieder eingekehrt sind. Diese Erscheinung tritt unabhängig davon ein, ob die Schaumzuckermasse bereits vor Eintritt in die sich auf dem Transportwege stark verändernden Druckverhältnisse bereits den oben beschriebenen Spalt als Anzeichen für den eingetretenen Prozeß des Ausgleichs der Druckverhältnisse aufweist oder nicht.

Aufgabe der Erfindung ist es, diese Nachteile zu vermeiden und das Schaumzuckererzeugnis von Anfang an so auszubilden, daß die plötzlichen Veränderungen der Druckverhältnisse nicht zu einer Beschädigung des Erzeugnisses einschließlich der Überzugsmasse führen.

Diese Aufgabe wird erfindungsgemäß dadurch gelöst, daß zum Aufbringen der Schaumzuckermasse ein Gebäckplättchen mit einer oder mehreren zentrischen Bohrungen verwendet wird. Durch diese Bohrungen wird ermöglicht, daß sich der Luftaustausch unmittelbar nach dem Überziehen der Schaumzuckermasse mit der Überzugsmasse in relativ kurzer Zeit gegenüber den bisherigen Herstellungsverfahren beschleunigt vollzieht.

Auf diese Weise bildet sich der die Stabilisierung des Erzeugnisses anzeigende Spalt jeweils oberhalb der im Gebäckplättchen befindlichen erfindungsgemäßen Bohrungen, weil der Luftaustausch mit dem damit verbundenen Druckausgleich auf diese Stellen des Erzeugnisses konzentriert wird. Diese Konzentration des Druckausgleichs auf eine bestimmte Stelle führt dazu, daß die Schaumzuckermasse in ihrer ursprünglichen Form erhalten bleibt.

Dies hat zur Folge, daß auch bei sich plötzlich verändernden Druckverhältnissen der Außenluft, insbesondere bei Transporten in Flugzeugen und über hoch gelegene Straßen und/oder Gebirgspässe ein Unterdruck innerhalb des überzogenen Schaumzuckererzeugnisses nicht mehr vorhanden ist, der zu einer Expansion des Schaumzuckererzeugnisses mit ihren Folgen für den Bestand der erkalteten Überzugsmasse führen könnte.

Gemäß der Erfindung werden diese Wirkungen in optimaler Weise dadurch herbeigeführt, daß die Bohrungen durch das Gebäckplättchen Durchmesser zwischen zwei mm und fünf mm aufweisen.

## Patentanspruch

Schaumzuckererzeugnis, das durch Aufbau einer Schaumzuckermasse auf einem Gebäckplättchen und Überziehen dieser Masse mit Schokolade oder Fondant oder Fettglasur hergestellt ist, dadurch gekennzeichnet, daß das Gebäckplättchen eine zentrische oder mehrere zentrische Bohrungen mit Durchmessern zwischen zwei mm und fünf mm aufweist.

## Claim

Foam sugar product being produced by heaping up a foam sugar mass on a pastry plate and covering said mass with chocolate or fondant or fat glazing, characterized in that the pastry plate is provided with one or a plurality of central bores having a diameter form two mm to five mm.

## Revendication

Produit en mousse de sucre qui est fabriqué en réalisant une masse de mousse de sucre sur une petite plaque à pâtisserie et en recouvrant cette masse de chocolat, de fondant ou d'un glaçage gras, caractérisé par le fait que la petite plaque à pâtisserie comporte un perçage central ou plusieurs perçages centraux de diamètres compris entre deux et cinq mm.